# EUROPÄISCHE PATENTSCHRIFT

(11) **EP 3 230 763 B1**
(45) Veröffentlichungstag und Bekanntmachung des Hinweises auf die Patenterteilung: **05.08.2020**
(21) Anmeldenummer: 15804741.5
(22) Anmeldetag: 02.12.2015
(51) Int. Cl.: G01S 7/52, G01S 15/04, G01S 15/87, G01S 15/88, E05F 15/43, E05F 15/73

(54) **VERFAHREN ZUM ERFASSEN EINES OBJEKTS IN EINEM ÖFFNUNGSBEREICH EINER TÜR EINES KRAFTFAHRZEUGS, FAHRERASSISTENZSYSTEM SOWIE KRAFTFAHRZEUG**
METHOD FOR DETECTING AN OBJECT IN AN OPENING REGION OF A DOOR OF A MOTOR VEHICLE, DRIVER ASSISTANCE SYSTEM, AND MOTOR VEHICLE
PROCÉDÉ DE DÉTECTION D'UN OBJET DANS UNE ZONE D'OUVERTURE D'UNE PORTE D'UN VÉHICULE AUTOMOBILE, SYSTÈME D'AIDE À LA CONDUITE ET VÉHICULE AUTOMOBILE

(30) Priorität: 10.12.2014 DE 102014118318
(43) Veröffentlichungstag der Anmeldung: 18.10.2017
(73) Patentinhaber: Valeo Schalter und Sensoren GmbH, 74321 Bietigheim-Bissingen (DE)
(72) Erfinder: FRAPSAUCE, Alice, 74321 Bietigheim-Bissingen (DE)
(74) Vertreter: Enge, Sebastian
(86) Internationale Anmeldenummer: PCT/EP2015/078343
(87) Internationale Veröffentlichungsnummer: WO 2016/091677

(56) Entgegenhaltungen:
- DE-A1-102008 056 201
- DE-A1-102010 056 171
- DE-B3-102011 121 775

## Beschreibung

Die vorliegende Erfindung betrifft ein Verfahren zum Erfassen eines Objekts in einem Öffnungsbereich einer ersten Tür eines Kraftfahrzeugs mittels zumindest eines ersten Abstandssensors, wobei der zumindest eine erste Abstandssensor in und/oder an der ersten Tür angeordnet ist und einen Erfassungsbereich aufweist, bei welchem ein aktueller Öffnungswinkel der ersten Tür erfasst wird und der Erfassungsbereich in Abhängigkeit von dem erfassten Öffnungswinkel angepasst wird. Die Erfindung betrifft außerdem ein Fahrerassistenzsystem für ein Kraftfahrzeug. Schließlich betrifft die vorliegende Erfindung ein Kraftfahrzeug mit einem solchen Fahrerassistenzsystem.

Das Interesse richtet sich vorliegend insbesondere auf Abstandssensoren, mit denen ein Abstand von einem Kraftfahrzeug zu einem Objekt bestimmt werden kann. Derartige Abstandssensoren können beispielsweise als Ultraschallsensoren, Radarsensoren oder als optische Sensoren ausgebildet sein. Aus dem Stand der Technik sind Fahrerassistenzsysteme bekannt, die den Fahrer beim Öffnen einer Tür unterstützen. Hierbei kann mit einem oder mehreren Abstandssensoren in der Tür erfasst werden, ob sich ein Objekt bzw. ein Hindernis in einem Öffnungsbereich einer Tür befindet. Ist dies der Fall, kann der Öffnungswinkel der Tür mit einer entsprechenden Stelleinrichtung derart begrenzt werden, dass die Tür beim Öffnen nicht mit dem Objekt kollidiert.

Hierzu beschreibt die DE 10 2004 062 370 A1 eine Vorrichtung zur Detektion eines Objekts in einem Bereich eines beweglich gelagerten Karosseriebauteils. Die Vorrichtung dient zur Detektion eines Objekts in einem Bereich der gesamten Fläche eines an einem Kraftfahrzeug beweglich gelagerten Karosseriebauteils, wobei die Sendeeinrichtung und die Empfangseinrichtung an dem Karosseriebauteil derart angeordnet sind, dass sich eine von der Strahlung der Sendeeinrichtung eingenommene Abstrahlfläche im Wesentlichen parallel und vollständig über die Fläche des Karosserieteils legt.

Die DE 10 2008 056 201 A1 offenbart ein Kraftfahrzeug mit mindestens einem in eine Offen- und eine Schließstellung verstellbaren Fahrzeugteil, insbesondere einer Klappe und/oder einer Tür. Dabei ist ein Sensor derart an dem Fahrzeugteil angeordnet, dass der Detektionsbereich des Sensors beim Verstellen des Fahrzeugteils mit diesem bewegt wird und in Verstellrichtung des Fahrzeugteils diesem zumindest bereichsweise vorauseilt.

Zudem ist aus der EP 1 564 358 A1 ein Detektionssystem zum Detektieren eines beweglichen Objekts bezüglich einer beweglichen Tür bekannt. Dabei sind in der beweglichen Tür ein Sensor zum Detektieren des Objekts und ein Türpositionssensor vorgesehen. Der Detektionsbereich des Sensors wird als Funktion der detektierten Position der Tür angepasst.

Es ist Aufgabe der vorliegenden Erfindung, eine Lösung aufzuzeigen, wie ein Objekt in einem Öffnungsbereich einer Tür eines Kraftfahrzeugs zuverlässiger erfasst werden kann.

Diese Aufgabe wird erfindungsgemäß durch ein Verfahren, sowie durch ein Kraftfahrzeug mit einem Fahrerassistenzsystem mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Ein erfindungsgemäßes Verfahren dient zum Erfassen eines Objekts in einem Öffnungsbereich einer ersten Tür eines Kraftfahrzeugs mittels zumindest eines ersten Abstandssensors, wobei der zumindest eine erste Abstandssensor in und/oder an der ersten Tür angeordnet ist und einen Erfassungsbereich aufweist. Bei dem Verfahren wird ein aktueller Öffnungswinkel der ersten Tür erfasst und der Erfassungsbereich wird in Abhängigkeit von dem erfassten Öffnungswinkel angepasst. Ferner wird eine Zustandsgröße zumindest eines von der ersten Tür verschiedenen Bauteils des Kraftfahrzeugs bestimmt, wobei die Zustandsgröße eine Position und/oder eine Betriebseinstellung des zumindest einen Bauteils beschreibt, und der Erfassungsbereich des zumindest einen ersten Abstandssensors wird zusätzlich in Abhängigkeit von der bestimmten Zustandsgröße angepasst.

Das Verfahren dient zum Erfassen eines Objekts bzw. Hindernisses in einem Öffnungsbereich einer ersten Tür eines Kraftfahrzeugs. Die erste Tür kann insbesondere eine der hinteren Türen bei einem Kraftfahrzeug mit vorderen und hinteren Türen sein. Dabei ist zumindest ein Abstandssensor vorgesehen, der an oder zumindest bereichweise innerhalb der Tür angeordnet ist. Der zumindest eine Abstandssensor kann auch verdeckt hinter einem Karosserieblech der Tür angeordnet sein. Die erste Tür kann zwischen einer Geschlossenstellung und einer Offenstellung bewegt bzw. verschwenkt werden. Der Öffnungsbereich der ersten Tür beschreibt insbesondere den Bereich, in welchem die Tür zwischen der Geschlossenstellung und der Offenstellung bewegt werden kann. Der Öffnungsbereich ist also der Bereich, den die Tür beim Bewegen einnehmen kann. Der zumindest eine Abstandssensor kann beispielsweise ein Radarsensor oder ein Lasersensor sein. Bevorzugt ist der zumindest eine Abstandssensor ein Ultraschallsensor. Der Abstandssensor kann insbesondere nach dem Echolotprinzip ausgebildet sein. Das heißt er sendet ein Sendesignal aus, welches von dem Objekt reflektiert wird und wieder auf den Abstandssensor trifft. Anhand der Laufzeit des Sendesignals kann der Abstand zu dem Objekt ermittelt werden. Der Abstandssensor weist einen Erfassungsbereich auf, in welchem er Objekte bzw. den Abstand zwischen dem Abstandssensor und dem Objekt detektieren kann. Ferner wird der Öffnungswinkel der ersten Tür erfasst. Dies kann beispielsweise mit einem entsprechenden Sensor erfolgen, mit dem die aktuelle Position der ersten Tür erfasst werden kann. Anhand des erfassten Öffnungswinkels kann der Erfassungsbereich des zumindest einen Abstandssensors angepasst werden. Der Erfassungsbereich des Abstandsensor kann bei der geschlossenen ersten Tür erfasst werden und als Referenzerfassungsbereich genutzt werden. Wenn die erste Tür geöffnet wird, kann der Erfassungsbereich des ersten Sensors so angepasst werden, dass dieser Referenzerfassungsbereich nicht überschritten wird.

Wenn sich die erste Tür in der geschlossenen Position befindet, kann der Erfassungsbereich einen vorbestimmten Wert aufweisen. Dieser kann abhängig von der Einbauposition des Abstandssensors festgelegt werden. Vorliegend wird der Erfassungsbereich angepasst, wenn sich die erste Tür öffnet. Je weiter die Tür geöffnet wird, also der Öffnungswinkel vergrößert wird, umso mehr kann der Erfassungsbereich reduziert werden. Auf diese Weise kann erreicht werden, dass der Öffnungsbereich der ersten Tür durch den ersten Abstandssensor erfasst werden kann und beim Öffnen der Tür nicht über diesen hinausragt. Vorliegend wird zusätzlich zu dem Öffnungswinkel der ersten Tür eine Zustandsgröße eines weiteren Bauteils des Kraftfahrzeugs erfasst. Die Zustandsgröße kann eine Position und/oder eine Betriebseinstellung des zumindest einen weiteren Bauteils beschreiben. Der Erfassungsbereich wird dann zusätzlich in Abhängigkeit von der bestimmten Zustandsgröße erfasst.

Der vorliegenden Erfindung liegt die Erkenntnis zugrunde, dass der erste Abstandssensor in der ersten Tür andere Bauteile des Kraftfahrzeugs als Hindernisse erkennen kann. Beispielsweise kann ein Teil der Karosserie oder das Rad als Hindernis erkannt werden, wenn die erste Tür geöffnet wird. Weiterhin kann es der Fall sein, dass die vordere Tür als Hindernis erkannt wird, wenn sich die hintere Tür öffnet. Ein weiteres Beispiel ist, dass die vordere Tür das Rad des Kraftfahrzeugs als Hindernis erkennt, wenn diese geöffnet wird. Vorliegend wird bei der Anpassung des Erfassungsbereichs des ersten Abstandssensors eine Position des weiteren Bauteils berücksichtigt. Hierbei kann auch ein Betriebszustand des zumindest eines weiteren Bauteils berücksichtigt werden. Somit kann beispielsweise verhindert werden, dass ein Bauteil des Kraftfahrzeugs selbst als Hindernis erkannt wird. Somit kann ein Objekt in dem Öffnungsbereich der ersten Tür zuverlässiger erfasst werden.

Bevorzugt beschreibt die Zustandsgröße eine Position und/oder eine Betriebseinstellung einer zweiten Tür bzw. einer vorderen Tür des Kraftfahrzeugs und/oder eines Bauteils der zweiten Tür, wobei die zweite Tür derart zu der ersten Tür angeordnet ist, dass die zweite Tür bei einer vorbestimmten Lage der ersten Tür in dem Erfassungsbereich des zumindest einen ersten Abstandssensors verschwenkbar ist. Die erste und die zweite Tür können hierbei bevorzugt auf der gleichen Seite des Fahrzeugs angeordnet sein. Beispielsweise kann die erste Tür die hintere Tür und die zweite Tür die vordere Tür auf der gleichen Seite des Kraftfahrzeugs sein. Wenn sich die erste Tür in einer vorbestimmten Öffnungsposition befindet, kann es der Fall sein, dass die zweite Tür in dem Erfassungsbereich des ersten Abstandssensors der ersten Tür bewegt werden kann. Dies wird vorliegend in Form der Zustandsgröße und der Anpassung des Erfassungsbereichs anhand der Zustandsgröße berücksichtigt. Somit kann verhindert werden, dass die zweite Tür von dem ersten Abstandssensor als Hindernis bzw. Objekt erkannt wird.

In einer weiteren Ausführungsform wird als die Zustandsgröße ein Öffnungsbereich der zweiten Tür des Kraftfahrzeugs bestimmt. Der Öffnungsbereich der zweiten Tür beschreibt insbesondere den Bereich, in welchem die zweite Tür zwischen einer Geschlossenstellung und einer Offenstellung bewegt werden kann. Der Öffnungsbereich der zweiten Tür kann beispielsweise in einer Steuereinrichtung hinterlegt sein oder anhand der Abmessungen und/oder der Einbaulage der zweiten Tür bestimmt werden. In diesem Fall kann der Erfassungsbereich des ersten Abstandssensors so angepasst werden, dass sich dieser nicht mit dem Öffnungsbereich der zweiten Tür überschneidet. Der mögliche Öffnungsbereich der zweiten Tür kann insbesondere berücksichtigt werden, wenn die zweite Tür aktuell geschlossen ist. Auf diese Weise kann verhindert werden, dass die zweite Tür beim Öffnen von dem ersten Abstandssensor fälschlicherweise als Hindernis bzw. Objekt erkannt wird.

In einer weiteren Ausführungsform wird als die Zustandsgröße ein aktueller Öffnungswinkel der zweiten Tür des Kraftfahrzeugs bestimmt. Der Öffnungswinkel der zweiten Tür kann ebenfalls mit einem entsprechenden Sensor erfasst werden und beispielsweise an eine Steuereinrichtung des Kraftfahrzeugs übertragen werden. Somit kann berücksichtigt werden, in welcher Lage bzw. Position sich die zweite Tür momentan befindet. Auf diese Weise kann der Erfassungsbereich des ersten Abstandssensors in der ersten Tür präzise an den aktuellen Öffnungswinkel der zweiten Tür angepasst werden. Auf diese Weise kann erreicht werden, dass Objekte in dem Öffnungsbereich zuverlässig erkannt werden können.

In einer weiteren Ausführungsform wird als die Zustandsgröße ein Erfassungsbereich zumindest eines zweiten Abstandssensors bestimmt, welcher in und/oder an der zweiten Tür angeordnet ist. Bei dem zweiten Abstandssensor, der in und/oder an der zweiten Tür angeordnet ist, kann ebenfalls der Erfassungsbereich des zweiten Abstandssensors in Abhängigkeit von dem Öffnungswinkel der zweiten Tür angepasst werden. Auch hier kann insbesondere die Zustandsgröße zumindest eines weiteren Bauteils des Kraftfahrzeugs berücksichtigt werden und der Erfassungsbereich des zweiten Abstandssensors kann in Abhängigkeit von der erfassten Zustandsgröße angepasst werden. Dabei kann es auch vorgesehen sein, dass zum Detektieren des Objekt in dem Öffnungsbereich der ersten Tür die Sensordaten des zweiten Abstandssensors in der zweiten Tür herangezogen werden und umgekehrt. Wenn der aktuelle Erfassungsbereich des zweiten Abstandssensors bekannt ist, kann der Erfassungsbereich des ersten Abstandssensors an diesen angepasst werden. Damit kann beispielsweise erreicht werden, dass sich große Lücken zwischen den Erfassungsbereich des ersten und des zweiten Abstandssensors ergeben. Auf diese Weise kann das Objekt zuverlässig erfasst werden.

Weiterhin ist es vorteilhaft, wenn als die Zustandsgröße eine Position eines Karosseriebauteils des Kraftfahrzeugs bestimmt wird. Beispielsweise können die äußeren Abmessungen der Karosserie des Kraftfahrzeugs berücksichtigt werden. Die Position bzw. die Lage der Außenflächen der Karosserie des Kraftfahrzeugs können beispielsweise in der Steuereinrichtung des Kraftfahrzeugs hinterlegt sein. Somit kann verhindert werden, dass ein Radkasten oder ein anderes Karosseriebauteil von einem der Abstandssensoren als Hindernis erkannt wird.

In einer weiteren Ausführungsform wird als die Zustandsgröße eine Position des Rades des Kraftfahrzeugs bestimmt. Dabei kann beispielsweise zum Anpassen des Erfassungsbereichs des Abstandssensors ein Verschwenkbereich zumindest eines lenkbaren Rades des Kraftfahrzeugs berücksichtigt werden. Weiterhin kann es vorgesehen sein, dass die aktuelle Position des lenkbaren Rades bestimmt wird. Hierzu kann die aktuelle Position des Rades anhand der Daten des Lenkwinkelsensors ermittelt werden. Somit kann zuverlässig verhindert werden, dass ein Rad, insbesondere ein eingeschlagenes Rad, von dem Abstandssensor, beispielsweise dem Abstandssensor in der vorderen Tür, als Hindernis erkannt wird.

In einer Ausführungsform wird zum Anpassen des Erfassungsbereichs des zumindest einen ersten Abstandssensors ein Schwellenwert für ein Empfangssignal des zumindest einen ersten Abstandssensors angepasst. Der erste Abstandssensor kann insbesondere ein Sendesignal aussenden, welches von dem Objekt reflektiert wird und wieder auf den ersten Abstandssensor trifft. Anhand des reflektierten Sendesignals kann ein Empfangssignal bestimmt werden. Dabei können zum Bestimmen des Abstands zwischen dem Abstandssensor und dem Objekt beispielsweise nur Empfangssignale berücksichtigt werden, welche einen entsprechenden Schwellenwert bezüglich ihrer Amplitude überschreiten. Zum Anpassen des Erfassungsbereichs des ersten Abstandssensors kann der Schwellenwert entsprechend angepasst werden. Auf diese Weise kann der Erfassungsbereich des ersten Abstandssensors einfach angepasst werden und somit entsprechende Bereiche, welche nicht erfasst werden sollen, ausgeblendet werden.

In einer weiteren Ausführungsform wird zum Anpassen des Erfassungsbereichs des zumindest einen ersten Abstandssensors eine Empfangsempfindlichkeit des zumindest einen ersten Abstandssensors verändert. Um das Empfangssignal bereitzustellen, kann der erste Abstandssensor eine entsprechende Elektronik aufweisen. Mit dieser Elektronik kann beispielsweise das Signal, das in Folge des reflektierten Sendesignals mit einem Wandler bzw. Empfänger bereitgestellt wird, entsprechend verstärkt werden. Zum Anpassen der Empfindlichkeit kann die Verstärkung entsprechend angepasst werden. Somit kann auf einfach Weise der Erfassungsbereichs angepasst werden.

Ein erfindungsgemäßes Fahrerassistenzsystem für ein Kraftfahrzeug umfasst zumindest einen ersten Abstandssensor, welcher in und/oder an einer ersten Tür des Kraftfahrzeugs angeordnet ist. Zudem umfasst das Fahrerassistenzsystem eine Steuereinrichtung, welche zum Durchführen eines erfindungsgemäßen Verfahrens ausgelegt ist. Die Steuereinrichtung kann beispielsweise durch ein Steuergerät (Electronic Control Unit, ECU) des Kraftfahrzeugs gebildet sein.

Bevorzugt weist das Fahrerassistenzsystem eine Stelleinrichtung zum Öffnen der ersten Tür und/oder zum Begrenzen eines Öffnungswinkels der ersten Tür in Abhängigkeit von einem dem zumindest einen ersten Abstandssensor erfassten Objekt auf. Die Stelleinrichtung kann beispielsweise derart ausgelegt sein, dass sie das Öffnen der Tür derart begrenzt, dass eine Kollision zwischen der ersten Tür und dem Objekt verhindert wird. Alternativ oder zusätzlich kann die Stelleinrichtung derart ausgebildet sein, dass sie die Tür automatisch öffnet. Dabei kann das Öffnen nur soweit ermöglicht werden, dass keine Kollision zwischen der ersten Tür und dem Objekt erfolgt.

In einer weiteren Ausführungsform weist das Fahrerassistenzsystem eine Warneinrichtung zum Ausgeben eines Warnsignals in Abhängigkeit von dem mit dem zumindest einen ersten Abstandssensor erfassten Objekt auf. Falls ein Objekt in dem Öffnungsbereich der ersten Tür erfasst wird, kann dies dem Fahrer des Kraftfahrzeugs mitgeteilt werden. Insbesondere kann ein akustisches, optisches und/oder haptisches Warnsignal ausgegeben werden. Somit kann auf zuverlässige Weise erreicht werden, dass die Tür beim Öffnen nicht beschädigt wird.

Der zumindest eine Abstandssensor weist bevorzugt einen Ultraschallsensor auf. Dabei kann es auch vorgesehen sein, dass in der ersten Tür eine Mehrzahl von Abstandssensoren angeordnet ist. Die Abstandssensoren können beispielsweise entlang der Fahrzeuglängsachse und/oder der Fahrzeughochachse verteilt angeordnet sein. Somit kann das Objekt in dem Öffnungsbereich der ersten Tür erkannt werden. Es kann auch vorgesehen sein, dass in jeder Tür des Kraftfahrzeugs zumindest ein Abstandsensor angeordnet ist.

Das erfindungsgemäße Kraftfahrzeug umfasst ein erfindungsgemäßes Fahrerassistenzsystem. Das Kraftfahrzeug ist insbesondere als Personenkraftwagen ausgebildet.

Die mit Bezug auf das erfindungsgemäße Verfahren vorgestellten bevorzugten Ausführungsformen und deren Vorteile gelten entsprechend für das erfindungsgemäße Fahrerassistenzsystem sowie für das erfindungsgemäße Kraftfahrzeug.

Weitere Merkmale der Erfindung ergeben sich aus den Ansprüchen, den Figuren und der Figurenbeschreibung. Die in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als erfasst und offenbart angesehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen.

Die Erfindung wird nun anhand eines bevorzugten Ausführungsbeispiels sowie unter Bezugnahme auf die beigefügten Zeichnungen näher erläutert.

Dabei zeigen:
- Fig. 1: in schematischer Darstellung ein Kraftfahrzeug gemäß einer Ausführungsform der vorliegenden Erfindung, welches ein Fahrerassistenzsystem aufweist;
- Fig. 2: in schematischer Darstellung die linken Türen des Kraftfahrzeugs, in denen Abstandssensoren angeordnet sind sowie die Erfassungsbereiche der Abstandssensoren;
- Fig. 3: die Türen gemäß Fig. 2, wobei eine erste Tür zumindest bereichsweise geöffnet ist; und
- Fig. 4: die Türen gemäß Fig. 2, wobei die erste und eine zweite Tür zumindest bereichesweise geöffnet sind.

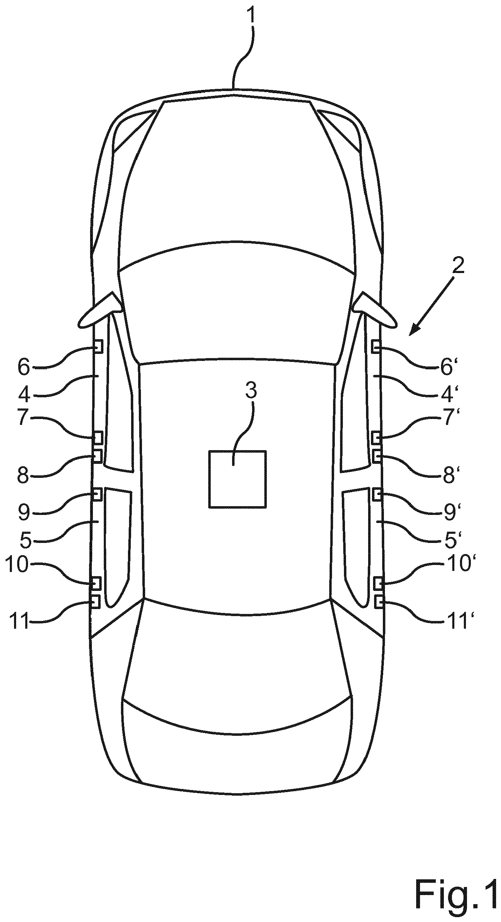

Fig. 1 zeigt ein Kraftfahrzeug 1 gemäß einer Ausführungsform der vorliegenden Erfindung. Das Kraftfahrzeug 1 ist als Personenkraftwagen ausgebildet. Das Kraftfahrzeug 1 umfasst außerdem ein Fahrerassistenzsystem 2. Das Fahrerassistenzsystem 2 ist insbesondere als ein sogenannter Türöffnungsassistent ausgebildet und unterstützt den Fahrer beim Öffnen der Türen 4, 4', 5, 5'.

In dem vorliegenden Ausführungsbeispiel umfasst das Kraftfahrzeug 1 vier Türen 4, 4', 5, 5'. Dabei ist auf der linken Seite des Kraftfahrzeugs eine erste Tür 5 bzw. die hintere Tür vorgesehen. Ferner ist eine zweite Tür 4 bzw. vordere Tür vorgesehen. Die erste Tür 5 umfasst zumindest einen ersten Abstandssensor. Vorliegend umfasst die erste Tür 5 drei Abstandsensoren 9, 10 und 11. Die zweite Tür 4 umfasst zumindest einen zweiten Abstandssensor. Vorliegend umfasst die zweite Tür 4 drei Abstandsensoren 6, 7 und 8. Mit den Abstandssensor 6, 7, 8, 9, 10 und 11 kann jeweils ein Objekt in einem Öffnungsbereich der Tür 4, 5 erfasst werden. Mit den Abstandssensoren 6 bis 11 kann zudem ein Abstand zwischen dem jeweiligen Abstandssensor 6 bis 11 und dem Objekt erkannt werden. Die Abstandssensoren 6 bis 11 sind insbesondere als Ultraschallsensoren ausgebildet. Die vordere Tür 4' auf der rechten Seite des Kraftfahrzeugs 1 ist baugleich zu der linken vorderen Tür bzw. zweiten Tür 4 ausgebildet und umfasst die Abstandssensoren 6' bis 8'. Zudem ist die hintere Tür 5', die auf der rechten Seite des Kraftfahrzeugs 1 angeordnet ist, baugleich zu der rechten hinteren Tür bzw. ersten Tür 5 ausgebildet und umfasst die Abstandssensoren 9' bis 11'.

Die Abstandssensoren 6 bis 11 sowie 6' bis 11' sind mit der Steuereinrichtung 3 zur Datenübertragung verbunden. Entsprechende Datenleitungen sind vorliegend der Übersichtlichkeit halber nicht dargestellt. Die mit den Abstandssensoren 6 bis 11 sowie 6' bis 11' erfassten Abstandswerte können also an die Steuereinrichtung übertragen werden. Ferner umfasst jede Tür 4, 4', 5, 5' einen entsprechenden Sensor, mit dem der jeweilige Öffnungswinkel der Tür 4, 4', 5, 5' bzw. die aktuelle Position der Tür 4, 4', 5, 5' erfasst werden kann und an die Steuereinrichtung 3 übertragen werden kann.

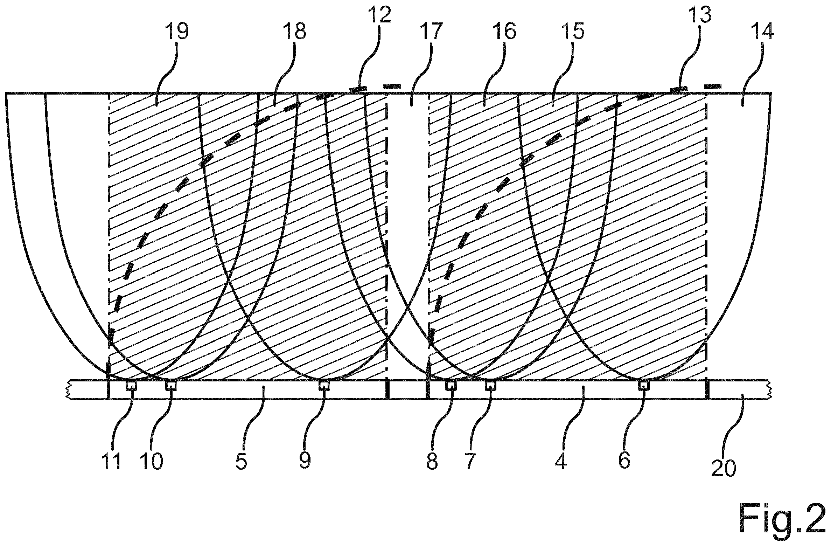

Fig. 2 zeigt eine ausschnittsweise Darstellung des Kraftfahrzeugs 1, wobei die erste Tür 5 und die zweite Tür 4 dargestellt sind. Zudem sind die Abstandssensoren 9 bis 11 in der ersten Tür 5 sowie die Abstandssensoren 6 bis 8 in der zweiten Tür 4 dargestellt. In dem Beispiel von Fig. 2 sind die erste Tür 5 und die zweite Tür 4 geschlossen. Ferner sind die jeweiligen Erfassungsbereiche 14 bis 19 der Abstandssensoren 6 bis 11 dargestellt. Der Abstandssensor 6 weist einen Erfassungsbereich 14 auf, der Abstandssensor 7 weist einen Erfassungsbereich 15 auf, der Abstandssensor 8 weist einen Erfassungsbereich 16 auf, der Abstandssensor 9 weist einen Erfassungsbereich 17 auf, der Abstandssensor 10 weist einen Erfassungsbereich 18 auf und der Abstandssensor 11 weist einen Erfassungsbereich 19 auf. Die Erfassungsbereiche 14 bis 19 beschreiben die Bereiche, in denen ein Objekt mit den jeweiligen Abstandssensoren 6 bis 11 erfasst werden kann. Zudem sind in Fig. 2 die gestrichelten Linien 12 und 13 gezeigt. Die gestrichelten Linien 12 und 13 veranschaulichen den jeweiligen Öffnungsbereich der Türen 4 und 5. Der Öffnungsbereich 4, 5 beschreibt den Bereich, in den die Türen 4, 5 beim Öffnen verschwenkt bzw. bewegt werden können. Die jeweilige Linie 12, 13 beschreibt die äußere Grenze des jeweiligen Öffnungsbereichs.

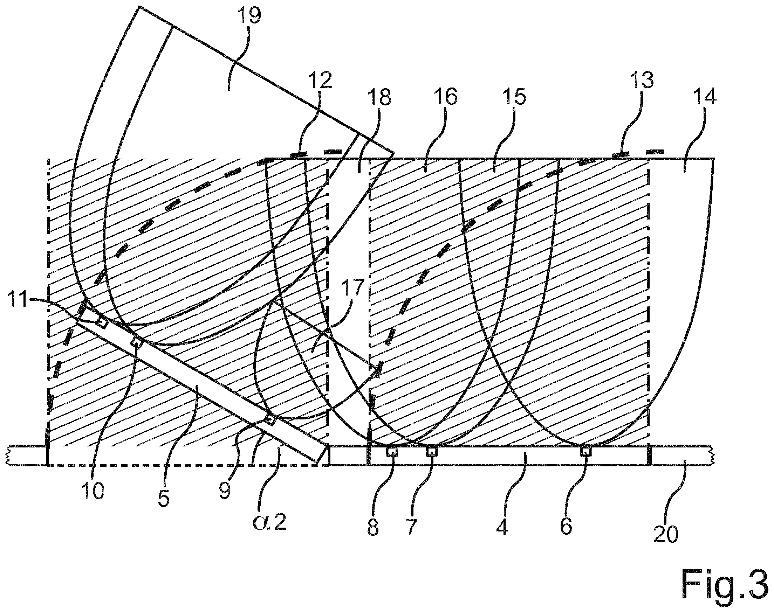

Fig. 3 zeigt die beiden Türen 4, 5, wobei die erste Tür 5 zumindest bereichsweise geöffnet ist. Vorliegend ist die erste Tür 5 um den Öffnungswinkel α2 geöffnet. Die Erfassungsbereiche 17 bis 19 der Abstandssensoren 9 bis 11 werden in Abhängigkeit von dem Öffnungswinkel α2 der ersten Tür 5 angepasst. Zu diesem Zweck wird der aktuelle Öffnungswinkel α2 der ersten Tür 5 kontinuierlich erfasst. In Abhängigkeit von dem aktuellen Öffnungswinkel α2 werden die Erfassungsbereiche 17 bis 19 der Abstandssensoren 9 bis 11 entsprechend angepasst. Insbesondere werden die Erfassungsebereiche 17 bis 19 beim Öffnen der ersten Tür 5 verringert. Somit kann verhindert werden, dass ein Objekt erfasst wird, welche sich außerhalb des Öffnungsbereiches der ersten Tür 5 befindet.

Ferner wird vorliegend zum Anpassen der Erfassungsbereiche 17 bis 19 der Öffnungsbereich der zweiten Tür 4 berücksichtigt. Vorliegen ist zu erkennen, dass der Erfassungsbereich 17 des Abstandssensors 9 derart angepasst wird, dass dieser nicht über die Linie 13 ragt und somit der Erfassungsbereich 17 keine Überschneidung mit dem Öffnungsbereich der zweiten Tür 4 aufweist. Eine derartige Anpassung der Erfassungsbereich 17 bis 19 erfolgt insbesondere, wenn die erste Tür 4 momentan geschlossen ist. Somit kann verhindert werden, dass in der gezeigten Stellung der ersten Tür 5 die zweite Tür 4 beim Öffnen als Objekt bzw. Hindernis erkannt wird.

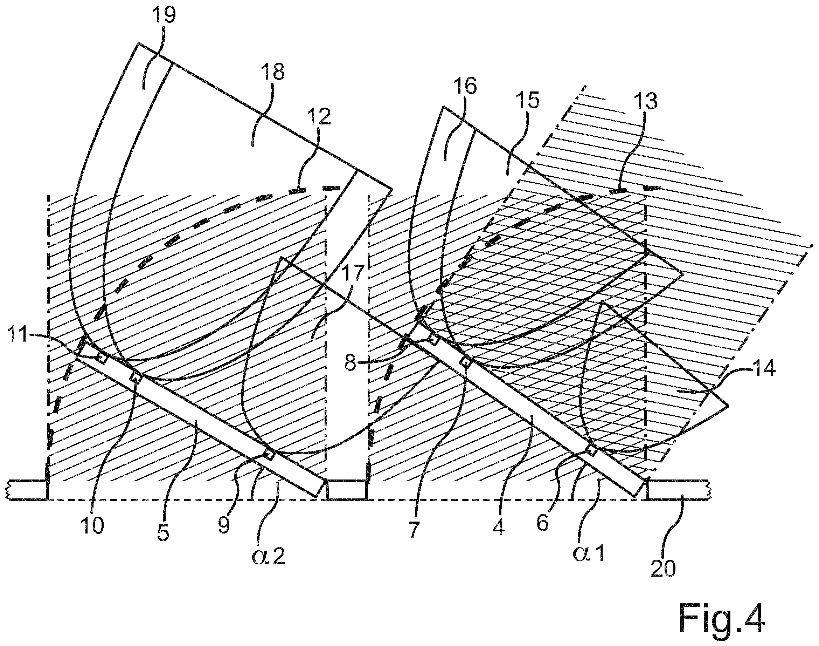

Fig. 4 zeigt ein weiteres Beispiel, bei welchem die zweite Tür 4 ebenfalls geöffnet ist. Vorliegend ist die zweite Tür 4 um den Öffnungswinkel α1 verschwenkt. Die Erfassungsbereiche 14 bis 16 der Abstandssensoren 6 bis 8 in der zweiten Tür 4 sind ebenfalls in Abhängigkeit von dem aktuellen Öffnungswinkel α1 angepasst. Dabei wird zusätzlich eine Position eines weiteren Karosseriebauteils 20, beispielsweise eines Radkastens, berücksichtigt. Die Lagen der Außenflächen der Karosseriebauteile des Kraftfahrzeugs können beispielsweise in der Steuereinrichtung 3 hinterlegt sein. Der jeweilige Erfassungsbereich 14, 15, 16 der Abstandssensoren 6 bis 8 kann in Abhängigkeit von der Position des Karosseriebauteils 20 angepasst werden. Somit kann verhindert werden, dass beispielsweise der Radkasten als Hindernis erkannt wird.

Vorliegend werden zudem die Erfassungsbereiche 17 bis 19 der Abstandssensoren 9 bis 11 in der ersten Tür 5 anhand des aktuellen Öffnungswinkels α1 der zweiten Tür 4 angepasst. Hierbei können auch die Abmessungen der zweiten Tür 4 berücksichtigt werden. Insbesondere kann die Länge und die Dicke der zweiten Tür 4 berücksichtigt werden. Beispielsweise ist der Erfassungsbereich 17 des Abstandssensors 9 im Vergleich zu der Anordnung gemäß Fig. 3 größer. Somit kann beispielsweise ein Objekt zuverlässig erkannt werden, welches sich in dem Bereich zwischen der ersten Tür 5 und der zweiten Tür 4 befindet. Eine weitere Lösung, um die zweite Tür 4 nicht mit den Abstandssensoren 9 bis 11 der ersten Tür als Hindernis zu erkennen, besteht darin, dass die Abstandssensoren 9 bis 11 und insbesondere der vordere Abstandssensor 9 ihre Erfassungsbereiche 17 bis 19 so anpassen, dass diese den Bereich der ersten Tür 4 (linker schraffierter Bereich) nicht überschreiten.

In den Türen 4, 4', 5, 5' kann jeweils eine entsprechende Stelleinrichtung vorgesehen sein. Die Stelleinrichtung kann den Öffnungswinkel α1, α2 der Türen 4, 4', 5, 5' in Abhängigkeit von der Position des Objekts im Öffnungsbereich der jeweiligen Türen 4, 4', 5, 5'beim Öffnen begrenzen. Alternativ oder zusätzlich kann die Stelleinrichtung nur soweit öffnen, dass eine Kollision zwischen der jeweiligen Tür 4, 4', 5, 5' und dem Objekt unterbleibt.

## Patentansprüche

1. Verfahren zum Erfassen eines Objekts in einem Öffnungsbereich einer ersten Tür (5) eines Kraftfahrzeugs (1) mittels zumindest eines ersten Abstandssensors (9, 10, 11), wobei der zumindest eine erste Abstandssensor (9, 10, 11) in und/oder an der ersten Tür (5) angeordnet ist und einen Erfassungsbereich (17, 18, 19) aufweist, wobei bei dem Verfahren ein aktueller Öffnungswinkel (α2) der ersten Tür (5) erfasst wird und der Erfassungsbereich (17, 18, 19) in Abhängigkeit von dem erfassten Öffnungswinkel (α2) angepasst wird,
**dadurch gekennzeichnet, dass**
eine Zustandsgröße zumindest eines von der ersten Tür (5) verschiedenen Bauteils des Kraftfahrzeugs (1) bestimmt wird, wobei die Zustandsgröße eine Position und/oder eine Betriebseinstellung einer zweiten Tür (4) des Kraftfahrzeugs (1) und/oder eines Bauteil der zweiten Tür (4) beschreibt, und der Erfassungsbereich (17, 18, 19) des zumindest einen ersten Abstandssensors (9, 10, 11) zusätzlich in Abhängigkeit von der bestimmten Zustandsgröße angepasst wird, wobei die zweite Tür (4) derart zu der ersten Tür (5) angeordnet ist, dass die zweite Tür (4) bei einer vorbestimmten Lage der ersten Tür (5) in dem Erfassungsbereich (17, 18, 19) des ersten Abstandsensors (9, 10, 11) verschwenkbar ist.

2. Verfahren nach Anspruch 1,
**dadurch gekennzeichnet, dass**
als die Zustandsgröße ein Öffnungsbereich der zweiten Tür (4) des Kraftfahrzeugs (1) bestimmt wird.

3. Verfahren nach Anspruch 1 oder 2,
**dadurch gekennzeichnet, dass**
als die Zustandsgröße ein aktueller Öffnungswinkel (α1) der zweiten Tür (4) des Kraftfahrzeugs (1) bestimmt wird.

4. Verfahren nach einem der vorhergehenden Ansprüche,
**dadurch gekennzeichnet, dass**
als die Zustandsgröße ein Erfassungsbereich (14, 15, 16) zumindest eines zweiten Abstandssensors (6, 7, 8) bestimmt wird, welcher in und/oder an der zweiten Tür (4) angeordnet ist.

5. Verfahren nach einem der vorhergehenden Ansprüche,
**dadurch gekennzeichnet, dass**
als die Zustandsgröße eine Position eines Karosseriebauteils (20) des Kraftfahrzeugs (1) bestimmt wird.

6. Verfahren nach einem der vorhergehenden Ansprüche,
**dadurch gekennzeichnet, dass**
als die Zustandsgröße eine Position eines Rades des Kraftfahrzeugs (1) bestimmt wird.

7. Verfahren nach einem der vorhergehenden Ansprüche,
**dadurch gekennzeichnet, dass**
zum Anpassen des Erfassungsbereichs (17, 18, 19) des zumindest einen ersten Abstandssensors (9, 10, 11) ein Schwellenwert für ein Empfangssignal des zumindest einen ersten Abstandssensors (9, 10, 11) angepasst wird.

8. Verfahren nach einem der vorhergehenden Ansprüche,
**dadurch gekennzeichnet, dass**
zum Anpassen des Erfassungsbereichs des zumindest einen ersten Abstandssensors (9, 10, 11) eine Empfangsempfindlichkeit des zumindest einen ersten Abstandsensors (9, 10, 11) verändert wird.

9. Kraftfahrzeug (1) mit einem Fahrerassistenzsystem (2), mit zumindest einem ersten Abstandssensor (9, 10, 11) und mit einer ersten Tür (5) und einer zweiten Tür (4), wobei die zweite Tür (4) derart zu der ersten Tür (5) angeordnet ist, dass die zweite Tür (4) bei einer vorbestimmten Lage der ersten Tür (5) in den Erfassungsbereich (17, 18, 19), des ersten Abstandssensors (9, 10, 11) verschwenkbar ist, wobei der zumindest erste Abstandssensor (9, 10, 11) in und/oder an der ersten Tür (5) des Kraftfahrzeugs (1) angeordnet ist und mit einer Steuereinrichtung (3), welche zum Durchführen eines Verfahrens nach einem der vorhergehenden Ansprüche ausgelegt ist.

10. Kraftfahrzeug (1) nach Anspruch 9,
**dadurch gekennzeichnet, dass**
das Fahrerassistenzsystem (2) eine Stelleinrichtung zum Öffnen der ersten Tür (5) und/oder zum Begrenzen eines Öffnungswinkels (α2) der ersten Tür (5) in Abhängigkeit von einem mit dem zumindest einen ersten Abstandssensor (9, 10, 11) erfassten Objekt aufweist.

11. Kraftfahrzeug (1) nach Anspruch 9 oder 10,
**dadurch gekennzeichnet, dass**
das Fahrerassistenzsystem (2) eine Warneinrichtung zum Ausgeben eines Warnsignals in Abhängigkeit von dem mit dem zumindest einen ersten Abstandssensor (9, 10, 11) erfassten Objekt aufweist.

12. Kraftfahrzeug (1) nach einem der Ansprüche 9 bis 11,
**dadurch gekennzeichnet, dass**
der zumindest eine erste Abstandsensor (9, 10, 11) einen Ultraschallsensor aufweist.

## Claims

1. Method for detecting an object in an opening region of a first door (5) of a motor vehicle (1) by means of at least one first distance sensor (9, 10, 11), wherein the at least one first distance sensor (9, 10, 11) is disposed in and/or on the first door (5) and has a detection region (17, 18, 19), wherein a current opening angle (α2) of the first door (5) is detected in the method and the detection region (17, 18, 19) is adapted on the basis of the detected opening angle (α2),
**characterized in that**
a state variable of at least one component of the motor vehicle (1) that differs from the first door (5) is determined, wherein the state variable describes a position and/or an operational setting of a second door (4) of the motor vehicle (1) and/or of a component of the second door (4), and the detection region (17, 18, 19) of the at least one first distance sensor (9, 10, 11) is additionally adapted on the basis of the determined state variable, wherein the second door (4) is disposed in relation to the first door (5) in such a way that the second door (4) is able to be pivoted into the detection region (17, 18, 19) of the first distance sensor (9, 10, 11) in a predefined relative position of the first door (5).

2. Method according to Claim 1,
**characterized in that**
an opening region of the second door (4) of the motor vehicle (1) is determined as the state variable.

3. Method according to Claim 1 or 2,
**characterized in that**
a current opening angle (α1) of the second door (4) of the motor vehicle (1) is determined as the state variable.

4. Method according to any one of the preceding claims,
**characterized in that**
a detection region (14, 15, 16) of at least one second distance sensor (6, 7, 8), which is disposed in and/or on the second door (4), is determined as the state variable.

5. Method according to any one of the preceding claims,
**characterized in that**
a position of a body component (20) of the motor vehicle (1) is determined as the state variable.

6. Method according to any one of the preceding claims,
**characterized in that**
a position of a wheel of the motor vehicle (1) is determined as the state variable.

7. Method according to any one of the preceding claims,
**characterized in that**
a threshold for a reception signal of the at least one first distance sensor (9, 10, 11) is adapted for adapting the detection region (17, 18, 19) of the at least one first distance sensor (9, 10, 11).

8. Method according to any one of the preceding claims,
**characterized in that**
a reception sensitivity of the at least one first distance sensor (9, 10, 11) is altered for adapting the detection region of the at least one first distance sensor (9, 10, 11).

9. Motor vehicle (1) with a driver assistance system (2), comprising at least one first distance sensor (9, 10, 11) and comprising a first door (5) and a second door (4), wherein the second door (4) is disposed in such a way in relation to the first door (5) that the second door (4) is pivotable into the detection region (17, 18, 19) of the first distance sensor (9, 10, 11) in a predefined relative position of the first door (5), wherein the at least one first distance sensor (9, 10, 11) is disposed in and/or on the first door (5) of the motor vehicle (1), and comprising a control device (3) which is designed to carry out a method according to any one of the preceding claims.

10. Motor vehicle (1) according to Claim 9,
**characterized in that**
the driver assistance system (2) has a control device for opening the first door (5) and/or for limiting an opening angle (α2) of the first door (5) on the basis of an object detected by the at least one first distance sensor (9, 10, 11).

11. Motor vehicle (1) according to Claim 9 or 10,
**characterized in that**
the driver assistance system (2) has a warning device for outputting a warning signal on the basis of the object detected by the at least one first distance sensor (9, 10, 11).

12. Motor vehicle (1) according to any one of Claims 9 to 11,
**characterized in that**
the at least one first distance sensor (9, 10, 11) has an ultrasonic sensor.

## Revendications

1. Procédé de détection d'un objet dans une zone d'ouverture d'une première portière (5) d'un véhicule automobile (1) au moyen d'au moins un premier capteur de distance (9, 10, 11), l'au moins un premier capteur de distance (9, 10, 11) étant disposé dans et/ou sur la première portière (5) et possédant une zone de détection (17, 18, 19), un angle d'ouverture (α2) actuel de la première portière (5) étant détecté lors du procédé et la zone de détection (17, 18, 19) étant adaptée en fonction de l'angle d'ouverture (α2) détecté,
**caractérisé en ce que**
une grandeur d'état d'au moins un élément structural du véhicule automobile (1) différent de la première portière (5) est déterminée, la grandeur d'état décrivant une position et/ou un réglage de fonctionnement d'une deuxième portière (4) du véhicule automobile (1) et/ou un élément structural de la deuxième portière (4) et la zone de détection (17, 18, 19) de l'au moins un premier capteur de distance (9, 10, 11) étant en plus adaptée en fonction de la grandeur d'état déterminée, la deuxième portière (4) étant disposée par rapport à la première portière (5) de telle sorte que la deuxième portière (4), avec une position prédéterminée de la première portière (5), peut pivoter dans la zone de détection (17, 18, 19) du premier capteur de distance (9, 10, 11).

2. Procédé selon la revendication 1, **caractérisé en ce que** la grandeur d'état déterminée est une zone d'ouverture de la deuxième portière (4) du véhicule automobile (1).

3. Procédé selon la revendication 1 ou 2, **caractérisé en ce que** la grandeur d'état déterminée est un angle d'ouverture (α1) actuel de la deuxième portière (4) du véhicule automobile (1).

4. Procédé selon l'une des revendications précédentes, **caractérisé en ce que** la grandeur d'état déterminée est une zone de détection (14, 15, 16) d'au moins un deuxième capteur de distance (6, 7, 8) qui est disposé dans et/ou sur la deuxième portière (4).

5. Procédé selon l'une des revendications précédentes, **caractérisé en ce que** la grandeur d'état déterminée est une position d'un élément structural de carrosserie (20) du véhicule automobile (1).

6. Procédé selon l'une des revendications précédentes, **caractérisé en ce que** la grandeur d'état déterminée est une position roue du véhicule automobile (1).

7. Procédé selon l'une des revendications précédentes, **caractérisé en ce que** pour adapter la zone de détection (17, 18, 19) de l'au moins un premier capteur de distance (9, 10, 11), une valeur de seuil pour un signal de réception de l'au moins un premier capteur de distance (9, 10, 11) est adaptée.

8. Procédé selon l'une des revendications précédentes, **caractérisé en ce que** pour adapter la zone de détection de l'au moins un premier capteur de distance (9, 10, 11), une sensibilité de réception de l'au moins un premier capteur de distance (9, 10, 11) est modifiée.

9. Véhicule automobile (1) comprenant un système d'assistance au conducteur (2), comprenant au moins un premier capteur de distance (9, 10, 11) et comprenant une première portière (5) et une deuxième portière (4), la deuxième portière (4) étant disposée par rapport à la première portière (5) de telle sorte que la deuxième portière (4), avec une position prédéterminée de la première portière (5), peut pivoter dans la zone de détection (17, 18, 19) du premier capteur de distance (9, 10, 11), l'au moins un premier capteur de distance (9, 10, 11) étant disposé dans et/ou sur la première portière (5) du véhicule automobile (1), et comprenant un dispositif de commande (3) qui est conçu pour mettre en œuvre un procédé selon l'une des revendications précédentes.

10. Véhicule automobile (1) selon la revendication 9, **caractérisé en ce que** le système d'assistance au conducteur (2) possède un dispositif de commande destiné à ouvrir la première portière (5) et/ou à limiter un angle d'ouverture (α2) de la première portière (5) en fonction d'un objet détecté avec l'au moins un premier capteur de distance (9, 10, 11).

11. Véhicule automobile (1) selon la revendication 9 ou 10, **caractérisé en ce que** le système d'assistance au conducteur (2) possède un dispositif d'alerte destiné à délivrer un signal d'alerte en fonction de l'objet détecté avec l'au moins un premier capteur de distance (9, 10, 11).

12. Véhicule automobile (1) selon l'une des revendications 9 à 11, **caractérisé en ce que** l'au moins un premier capteur de distance (9, 10, 11) possède un capteur à ultrasons.
